# EUROPÄISCHE PATENTSCHRIFT

(11) **EP 0 300 223 B1**
(45) Veröffentlichungstag und Bekanntmachung des Hinweises auf die Patenterteilung: **08.09.1993**
(21) Anmeldenummer: 88110081.2
(22) Anmeldetag: 24.06.1988
(51) Int. Cl.: B29C 49/28, B29C 49/30, B29C 49/56

(54) **Schliessvorrichtung für Formen zum Herstellen von Gegenständen aus thermoplastischem Kunststoff**
Device for closing moulds for producing articles from a thermoplastic resin
Dispositif pour fermer des moules, destiné à fabriquer des objets en matières synthétique thermoplastique

(30) Priorität: 07.07.1987 DE 3722340
(43) Veröffentlichungstag der Anmeldung: 25.01.1989
(73) Patentinhaber: BATTENFELD FISCHER BLASFORMTECHNIK GMBH, D-53842 Troisdorf (DE)
(72) Erfinder: Wollschläger, Dieter, D-5330 Königswinter 41 (DE); Scharrenbroich, Helmut, D-5206 Neunkirchen-Seelscheid (DE)
(74) Vertreter: Müller, Gerd, Dipl.-Ing.

(56) Entgegenhaltungen:
- DE-A- 2 321 694
- DE-A- 2 413 880
- DE-A- 3 624 615
- US-A- 4 606 717

## Beschreibung

Die Erfindung betrifft eine Schließvorrichtung für Formen zum Herstellen von Gegenständen aus thermoplastischem Kunststoff, insbesondere zum Blasformen von Hohlkörpern auf Blasformmaschinen, mit zwei auf Führungsholmen linear verschieb bar geführten Formaufspannplatten, die durch einen Kraftan trieb, z.B. einen Schließmotor, sowie eine Gleichlaufvorrichtung zueinander gegenläufig bewegbar sind, und mit einem aus mindestens einer Zugstange, einer Druckstange sowie zwei diese an ihren Enden miteinander verbindenden Jochen bestehenden Rahmen, bei dem die Zug- und Druckstangen parallel und die Joche quer zur Verschieberichtung der Formaufspannplatten verlaufen, wobei das eine Joch mit einem Kragarm unmittelbar an der einen Formaufspannplatte angreift, während das andere Joch durch den zwischengeschalteten Kraftantrieb mit der zweiten Formaufspannplatte verbunden ist.

Durch die US-PS 4 248 582 ist eine Schließvorrichtung dieser Art bekannt. Sie hat vier unterhalb der Form angebrachte Holme, die symmetrisch zu einer in Schließrichtung verlaufenden, vertikalen Mittelebene liegen, mit der die Wirkungslinien der vom Kraftantrieb aufgebrachten Schließkräfte zusammenfallen. Die vier Holme sind hierbei in zwei horizontalen Ebenen übereinander angeordnet, wobei jedoch die Formaufspannplatten nur auf den in der oberen Horizontalebene befindlichen Holmen geführt sind. Die unteren Holme dieser Schließvorrichtung dienen hingegen als Lagerungselemente für Einrichtungen, mit deren Hilfe die gesamte Schließvorrichtung von einer Extruderstation in eine Blasstation oder umgekehrt gebracht werden kann.

Durch Zuordnung einer Gleichlaufvorrichtung zu den beiden Formaufspannplatten wird bei der bekannten Schließvorrichtung zwar dafür gesorgt, daß der vorhandene Kraftantrieb bzw. Schließmotor die beiden Formaufspannplatten bzw. die daran befindlichen Formhälften jeweils exakt um seinen halben Stellweg aufeinander zu und voneinander weg bewegt. Nachteilig bei dieser bekannten Schließvorrichtung ist jedoch, daß die über die beiden Formaufspannplatten auf die Formhälften ausgeübten Schließkräfte Verformungen der sie übertragenden Vorrichtungselemente, insbesondere der Führungsholme für die Formaufspannplatten, nach sich ziehen, welche wiederum Rückwirkungen auf die Schließlage der beiden Formhälften nehmen und deren Arbeitsweise nachhaltig beeinträchtigen können.

Durch die EP-PS 0 095 008 ist zwar schon eine Schließvorrichtung bekanntgeworden, bei welcher der Schließdruck der beiden Formhälften auch bei größeren Formen unter Verwendung schwacher Holme und Schließmotoren vergleichmäßigt werden soll, indem besondere Maßnahmen gegen die unerwünschte Verformung der die Schließkraft übertragenden Vorrichtungselemente getroffen sind. Es sind dabei drei Holme vorgesehen, welche die beiden Formaufspannplatten durchsetzen. Zwei dieser Holme liegen dabei in einer oberen Horizontalebene symmetrisch zur Vertikalebene, während der dritte Holm längs der Schnittlinie der unteren Horizontalebene mit der Vertikalebene verläuft und darüber hinaus eine um eine horizontale Achse schwenkbare Verbindung zwischen der einen Formaufspannplatte und der zugehörigen Formhälfte vorgesehen ist.

Die praktische Erfahrung hat jedoch gezeigt, daß alle diese gegen das Auftreten von Verformungen getroffenen Maßnahmen nicht zum gewünschten Erfolg führen. Es hat sich nämlich ergeben, daß die die schwenkbare Verbindung mit der einen Formhälfte aufweisende Formaufspannplatte den an sie gestellten Anforderungen bezüglich der Verformungsfreiheit nicht in jeder Hinsicht Rechnung tragen kann, weil sie nämlich nicht nur Führungsfunktion auszuüben hat, sondern zugleich auch die Aufbringung der Schließkraft übernehmen muß. Auch hier werden daher die Führungsholme auf Biegung beansprucht.

Der Erfindung liegt die Aufgabe zugrunde, eine Schließvorrichtung der anfangs angegebenen Art dahingehend zu verbessern, daß die Führung für die Formaufspannplatten und die Mittel zur Schließkraftaufbringung in zweckentsprechender Weise und gleichzeitig platzsparend voneinander entkoppelt werden.

Gelöst wird diese Aufgabe erfindungsgemäß - nach dem Kennzeichen des Anspruchs 1 - dadurch, daß der Rahmen mit dem Kraftantrieb an einem raumfesten Gehäuse aufgehängt ist, das die gesonderten, vom Rahmen unabhängigen Führungsholme trägt, und das die Joche des Rahmens zumindest an den Formaufspannplatten und/oder am zwischengeschalteten Kraftantrieb über Stützglieder angreifen, deren Achsebenen auf der Wirkungslinie der Schließkraft zwischen den beiden Formaufspannplatten liegen.

Bewährt hat es sich dabei besonders, wenn erfindungsgemäß - nach Anspruch 2 - die Stützglieder Gelenke sind.

Als besonders vorteilhaft hat es sich herausgestellt, wenn die Joche des Rahmens - nach Vorschlag des Anspruchs 3 -auch mit der Druckstange durch Gelenke in Verbindung stehen.

Eine andere vorteilhafte Weiterbildungsmaßnahme der Erfindung besteht - nach Anspruch 4 - darin, daß der Kraftantrieb mit der zweiten Formaufspannplatte ebenfalls über ein Gelenk gekuppelt ist, dessen Achsebene auf der Wirkungslinie der Schließkraft liegt.

Ein Ausbildungsvorschlag der Erfindung läuft - gemäß Anspruch 5 - darauf hinaus, daß das Gehäuse ein Lager für das Umkehrgetriebeglied der Gleichlaufvorrichtung trägt.

Bei dieser Bauart einer Schließvorrichtung hat es sich -nach Anspruch 6 - ebenfalls bewährt, daß die Führungsholme paarweise für die Formaufspannplatten vorgesehen sind, während-nach Anspruch 7 - die Zugstange des Rahmens zwischen den beiden Führungsholmen für die Formaufspannplatten, vorzugsweise auf gleicher Achsebene mit diesen, angeordnet ist.

Eine andere Bauart der erfindungsgemäßen Schließvorrichtung ist - nach Anspruch 8 - dadurch gekennzeichnet, daß der Rahmen zwei parallele Zugstangen aufweist, deren jede mit Radialspiel von einem hohlen Führungsholm umgeben ist.

In jedem Falle kann - gemäß Anspruch 9 - der Kraftantrieb oberhalb der Führungsholme, aber mittig zwischen diesen und den Zugstangen liegend angeordnet sein.

Bei der Ausbildung gemäß Anspruch 7 kann der Kraftantrieb aber auch auf gleicher Höhe mit den Führungsholmen für das Gehäuse und mittig zwischen diesen liegen.

Für alle Ausführungsformen einer erfindungsgemäßen Schließvorrichtung ist aber wichtig, daß - nach Anspruch 10 - das dem Rahmen zugeordnete Element des Kraftantriebs einen Ausleger trägt, an dem das dem Rahmen zugewendete Teil der Gleichlaufvorrichtung angreift.

Nach Anspruch 11 können darüber hinaus die Führungsholme axial verschiebbar im Gehäuse gelagert sein und an ihrem einen Ende mit dem Ausleger in Verbindung stehen.

Gemeinsam ist allen Ausführungsformen einer Schließvorrichtung, daß der die Schließkraftübertragung bewirkende Rahmen sich ohne nachteiligen Einfluß auf die Führung der Formaufspannplatten frei verformen kann. Ebenso ist es vorteilhaft, daß die exakte gegenläufige Verstellbewegung der Formaufspannplatten auch dann erhalten bleibt, wenn sich der Rahmen unter dem Einfluß der Schließkraftwirkung verformt, weil nämlich die Gleichlaufvorrichtung an einer Stelle mit diesem gekoppelt ist, die keinerlei Verformungskräften unterliegt.

In der Zeichnung ist der Gegenstand der Erfindung in Ausführungsbeispielen dargestellt. Hierbei zeigen
- Figur 1: in Seitenansicht und teilweise im Längsschnitt eine Schließvorrichtung für Formen zur Herstellung von Hohlkörpern auf Blasformmaschinen,
- Figur 2: eine Ansicht der Schließvorrichtung nach Fig. 1 in Pfeilrichtung II gesehen,
- Figur 3: in Seitenansicht und teilweise im Längsschnitt eine andere Ausführungsform einer Schließvorrichtung für Formen zum Herstellen von Hohlkörpern auf Blasformmaschinen und
- Figur 4: eine Ansicht der Schließvorrichtung nach Fig. 3 in Pfeilrichtung IV.

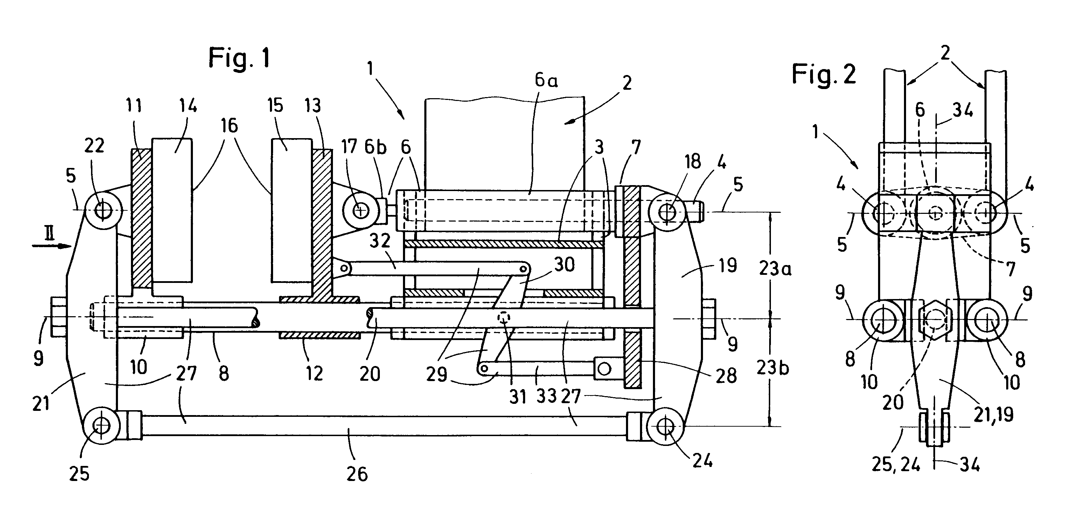

In den Fig. 1 und 2 der Zeichnung ist eine Schließvorrichtung 1 für Formen zum Herstellen von Hohlkörpern aus thermoplastischem Kunststoff auf Blasformmaschinen dargestellt.

Eine solche Schließvorrichtung 1 könnte jedoch gegebenenfalls auch für Formen benutzt werden, die auf andere Art und Weise, bspw. durch Spritzgießen zur Herstellung von Gegenständen aus thermoplastischem Kunststoff benutzt werden.

Die Schließvorrichtung 1 ist, bspw. insgesamt über Parallelogrammschwingen 2, in einem - nicht gezeigten -Maschinengestell verschwenkbar gelagert.

Die Schließvorrichtung 1 kann jedoch auch auf andere Art und Weise, bspw. über schräge Holme, relativ zu den sie aufnehmenden, verschiedenen Arbeitsstationen bewegt werden.

Bei der Schließvorrichtung 1 nach den Fig. 1 und 2 sind die Parallelogrammschwingen 2 an einem Gehäuse 3 angelenkt, und zwar über zwei in Längsrichtung dieses Gehäuses parallel verlaufende Führungsholme 4, die mit Abstand nebeneinander auf einer gemeinsamen Horizontalebene 5-5 liegen.

Zwischen den beiden Führungsholmen 4 ist dem Gehäuse 3 ein Kraftantrieb 6, bspw. eine hydraulische oder pneumatische Kolben-Zylinder-Einheit, als Schließmotor zugeordnet, dessen Längsachse vorzugsweise mittig zwischen den beiden Führungsholmen 4 auf deren gemeinsamer Horizontalebene 5-5 liegt, wie dies deutlich der Fig. 2 entnommen werden kann. Das Zylindergehäuse 6a des Kraftantriebs 6 ist dabei relativ zum Gehäuse 3 längsverschiebbar, ebenfalls auf den Führungsholmen 4 gehalten, und zwar mit Hilfe von Führungsplatten 7, die sich mindestens in der Nähe des hinteren Endes des Zylindergehäuses 6a befinden.

Mit Abstand unterhalb der Führungsholme 4, aber parallel zu diesen verlaufend, ist das Gehäuse 3 mit zwei ebenfalls parallelen Führungsholmen 8 ausgestattet, die eine gemeinsame Horizontalebene 9-9 haben und einseitig über das Gehäuse 3 hinausragen, wie das in Fig. 1 zu sehen ist.

Auf den beiden unteren Führungsholmen 8 des Gehäuses 3 ist über zwei Muffenstücke 10 eine erste Formaufspannplatte 11 längsschiebbar geführt und über zwei entsprechende Muffenstücke 12 ist ebenfalls auf den Führungsholmen 8 eine zweite Formaufspannplatte 13 längsbeweglich gehalten.

Die beiden Formaufspannplatten 11 und 13 erstrecken sich rechtwinklig zu den Längsachsen der Führungsholme 8 und der zugehörigen Muffenstücke 10 und 12. Die erste Formaufspannplatte 11 dient zur Befestigung einer Formhälfte 14 und die zweite Formaufspannplatte 13 wird zur Befestigung einer Formhälfte 15, bspw. einer Blasform 16 benutzt, wie sie für die Herstellung von Hohlkörpern aus thermoplastischem Kunststoff nötig ist.

An der Formaufspannplatte 13 greift der als Schließmotor dienende Kraftantrieb 6 über seine Kolbenstange 6b an. Dabei ist die Kolbenstange 6b über ein Gelenk 17 mit der Formaufspannplatte 13 verbunden, das eine horizontale Achse hat, die sich quer zu den Führungsholmen 4 erstreckt, mit diesen aber auf der gemeinsamen Achsebene 5-5 liegt.

Der Kraftantrieb 6 ist am hinteren Ende seines Zylindergehäuses 6a über ein Gelenk 18 mit einem Joch 19 verbunden, wobei das Gelenk 18 sich ebenfalls quer zur Längsrichtung der beiden Führungsholme 4 erstreckt, mit seiner Längsachse aber auf der gemeinsamen Achsebene 5-5 dieser Führungsholme 4 liegt.

Das Joch 19 ist am einen Ende einer Zugstange 20 verankert, die sich parallel zu den Führungsholmen 8 des Gehäuses 3 erstreckt, mittig zwischen diesen angeordnet ist und auf deren gemeinsamer Achsebene 9-9 liegt.

Am anderen Ende dieser Zugstange 20 ist ein Joch 21 festgelegt, das in seiner Ausführung dem Joch 19 entspricht, jedoch spiegelbildlich zu diesem angeordnet ist. Das Joch 21 steht über ein Gelenk 22 mit der Formaufspannplatte 11 in Verbindung, wobei die Achse des Gelenkes 22 sich parallel zur Achse der Gelenke 17 und 18 aber quer zur Längsrichtung der Führungsholme 4 und 8 erstreckt. Auch die Achse des Gelenkes 22 ist dabei auf der gemeinsamen Achsebene 5-5 für die beiden oberen Führungsholme 4 der Schließvorrichtung 1 gelegen, wie das der Fig. 1 deutlich entnommen werden kann.

An dieser Stelle sei erwähnt, daß die beiden Joche 19 und 21 bezogen auf die Längsachse der Zugstange 2 mit zwei nach entgegengesetzten Richtungen auskragenden Armen 23a und 23b übereinstimmender Länge versehen sind, wie dies in Fig. 1 für das Joch 19 angedeutet ist. Während dabei an den freien Enden der Arme 23a beider Joche 19 bzw. 21 die Gelenke 18 bzw. 22 vorgesehen sind, wirken die freien Enden der Arme 23b dieser Joche 19 und 21 jeweils über ein Gelenk 24 bzw. 25 mit einer Druckstange 26 zusammen, wie dies deutlich in Fig. 1 der Zeichnung zu sehen ist. Auch die Gelenke 24 und 25, welche die Joche 19 und 21 mit der Druckstange 26 verbinden, erstrecken sich quer zur Längsrichtung der Führungsholme 4 und 8; d.h., sie verlaufen parallel zu den Gelenken 17, 18 und 22, deren Lage und Anordnung bereits weiter oben erläutert wurde.

Die Zugstange 20 bildet mit der Druckstange 26 und den Armen 23b der beiden Joche 19 und 21 einen Rahmen 27, welcher wiederum über die Arme 23a der beiden Joche 19 und 21 sowie die Gelenke 17, 18 und 22 mit dem beiden Formaufspannplatten 13 und 11 in ständiger Wirkverbindung gehalten ist.

Eine weitere Wirkverbindung ist zwischen dem Gehäuse 3, der Formaufspannplatte 13 und einem Ausleger 28 über eine Gleichlaufvorrichtung 29 hergestellt. Der Ausleger 28 ist dabei starr am hinteren Ende des Zylindergehäuses 6a für den Kraftantrieb 6 befestigt und erstreckt sich im wesentlichen parallel zum Joch 19 des Rahmens 27.

Die Gleichlaufvorrichtung 29 weist einen gleicharmigen Hebel 30 auf, der um ein Gelenk 31 winkelverschwenkbar am Gehäuse 3 aufgehängt ist. Der eine Arm des gleicharmigen Hebels 30 steht dabei über eine Kuppelstange 32 mit der Formaufspannplatte 13 in Stellverbindung, während eine ähnliche Kuppelstange 33 den anderen Arm des zweiarmigen Hebels 30 mit dem Ausleger 28 des Zylindergehäuses 6a verbindet.

Bei einer Schwenkbewegung des gleicharmigen Hebels 30 um das Gelenk 31 führen die Kuppelstangen 32 und 33 zueinander entgegengesetzte Verstellbewegungen aus. Wenn also die Kuppelstange 32 eine Bewegung von rechts nach links ausführt, bewegt sich zugleich die Kuppelstange 33 um ein genau entsprechendes Maß von links nach rechts oder umgekehrt.

Wird durch Betätigung des Kraftantriebes 6 dessen Kolbenstange 6b aus der Stellung der Fig. 1 nach links verschoben, dann resultiert hieraus eine entsprechende Verschiebebewegung der Formaufspannplatte 13 auf den Führungsholmen 8 des Gehäuses 3. Durch diese Bewegung der Formaufspannplatte 13 wird dann die Gleichlaufvorrichtung 29 mitgenommen und bewirkt dadurch relativ zum Gehäuse 3 eine entsprechende Horizontalverschiebung des Zylindergehäuses 6a nach rechts auf den Führungsholmen 4. Durch die Verschiebebewegung des Zylindergehäuses 6a auf den Führungsholmen 4 nach rechts wird über das Joch 19 der Rahmen 27 von links nach rechts verlagert, so daß dieser Rahmen 27 um ein entsprechendes Maß auch die Formaufspannplatte 11 von links nach rechts auf den Führungsholmen 8 des Gehäuses 3 verschiebt. Die beiden Formaufspannplatten 11 und 13 mit den daran befestigten Formhälften 14 und 15 der Blasform 16 bewegen sich dabei entlang den Führungsholmen 8 des Gehäuses 3 aufeinander zu, bis die beiden Formhälften 14 und 15 unter Schließdruck in ihrer Trennebene aufeinanderstoßen. Die zwischen den beiden Formhälften 14 und 15 der Blasform 16 auftretenden Schließkräfte haben dabei eine Wirkungslinie, die auf der gemeinsamen Horizontalebene 5-5 der beiden oberen Führungsholme 4 liegt und daher zugleich mit den Achsebenen der Gelenke 17, 18 und 22 zusammenfällt.

Die über den Kraftantrieb 6 hervorgebrachten Schließkräfte werden dabei durch die Arme 23a der beiden Joche 19 und 21 in den Rahmen 27 eingeleitet und von diesem aufgenommen. Dabei auftretende Verformungen wirken sich aber lediglich innerhalb des Rahmens 27 selbst aus sowie auf dessen vertikale Raumlage, ohne daß sich Rückwirkungen an den Führungsholmen 8 für die beiden Formaufspannplatten 11 und 13 oder gar an den beiden Führungsholmen 4 für die Relativbewegung des Kraftantriebs 6 zum Gehäuse 3 einstellen könnten. Es tritt also eine völlige Entkopplung der vorhandenen Führungselemente von den Kraftübertragungselementen ein, die eine optimale Wirkungsweise der gesamten Schließvorrichtung 1 zur Folge hat.

Da die Gleichlaufvorrichtung 29 lediglich die Relativverlagerung zwischen Rahmen 27 sowie Formspannplatte 13 und dem Gehäuse 3 der Schließvorrichtung 1 in Abhängigkeit vom Kraftantrieb 6 koordiniert, ist sie ebenfalls von der Aufbringung der Schließkraft entkoppelt und braucht daher lediglich die nur relativ geringen Stellkräfte zu übernehmen. Die Gleichlaufvorrichtung 29 kann dabei auch anders als in der Zeichnung dargestellt ausgebildet werden. Bspw. könnte ein um die Achse 31 drehbar gelagertes Ritzel mit zwei gegenläufig verschiebbaren Zahnstangen kämmen, von denen die eine mit der Formaufspannplatte 13 und die andere mit dem Ausleger 28 fest verbunden ist.

Aus Fig. 2 der Zeichnung ist deutlich zu entnehmen, daß sich die Joche 19 und 21 des Rahmens 27 auf einer Vertikalebene 34-34 bewegen, die mittig zwischen den paarweise übereinander angeordneten Führungsholmen 4, 4 und 8, 8 liegt. Auch die Zugstange 20 und die Druckstange 26 des Rahmens 27 führen dabei ihre Verlagerungsbewegung relativ zum Gehäuse 3 der Schließvorrichtung 1 auf der Vertikalebene 34-34 aus. Es ergibt sich hierdurch eine baulich kompakte und funktionell robuste Bauweise der gesamten Schließvorrichtung 1.

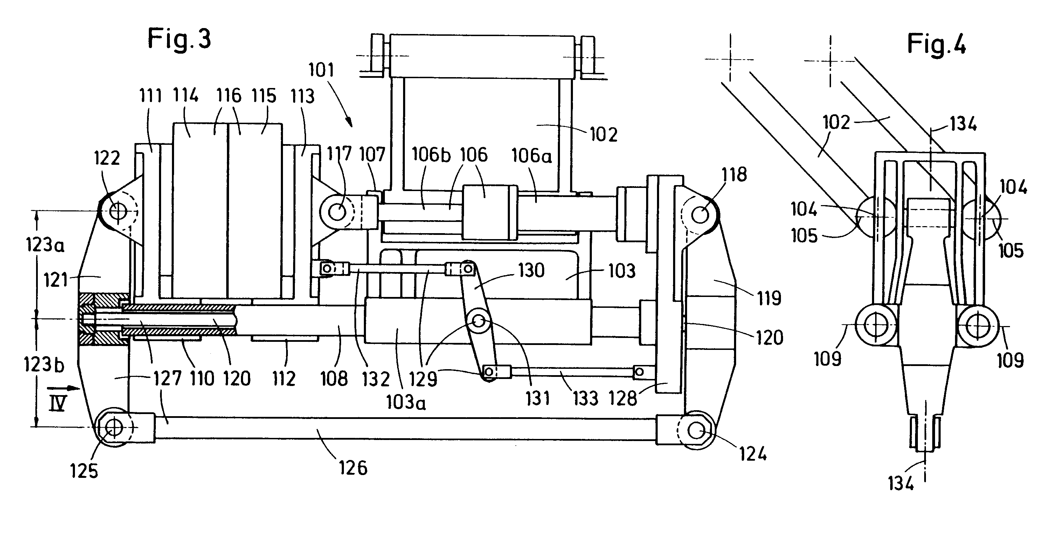

Die in den Fig. 3 und 4 der Zeichnung dargestellte Schließvorrichtung 101 ist eine Abwandlung der Schließvorrichtung 1 nach den Fig. 1 und 2. Alle im Verhältnis zum Ausführungsbeispiel nach den Fig. 1 und 2 bau- und/oder funktionsgleichen Teile sind dabei für das Ausführungsbeispiel nach den Fig. 3 und 4 mit den gleichen Bezugszeichen versehen, jedoch zur besseren Unterscheidung jeweils um die Zahl 100 erhöht worden.

Bis auf die nachfolgend im einzelnen herausgestellten Unterschiede ist die Schließvorrichtung 101 nach den Fig. 3 und 4 mit derjenigen nach den Fig. 1 und 2 baulich und/oder funktionell identisch, so daß insoweit die bereits im Zusammenhang mit den Fig. 1 und 2 gegebenen Erläuterungen gelten.

Bei der Schließvorrichtung 101 nach den Fig. 3 und 4 sind in dem an den Parallelogrammschwingen 102 um Gelenke 104 aufgehängte Gehäuse 103 die Führungsholme 108 axial verschiebbar gelagert, welche wiederum zur verschiebbaren Führung der Formaufspannplatten 111 und 113 über deren Muffenstücke 110 und 112 dienen.

Die Führungsholme 108 sind dabei als Hohlprofile, insbesondere als Rohre, ausgeführt und werden jeweils mit Radialspiel von einer Zugstange 120 durchsetzt, wie das in der linken Hälfte der Fig. 3 deutlich zu sehen ist. Jede der beiden Zugstangen 120 ist dabei mit ihren voneinander abgewendeten Enden einerseits im Joch 119 und andererseits im Joch 121 fest verankert.

Das Radialspiel zwischen dem Innenumfang der Führungsholme 108 und der diese jeweils durchsetzenden Zugstange 120 ist so groß bemessen, daß gegebenenfalls vorkommende Biegeverformungen der Zugstangen 120 sowie die durch das Verformen des Rahmens 127 und der Arme 123a verursachte Vertikalverschiebung des Rahmens 127 relativ zum Gehäuse keinerlei Verformungseinfluß auf die Führungsholme 108 nehmen können.

Die Führungsholme 108 sind an ihrem einen Ende axial unverschieblich an dem Ausleger 128 festgelegt, welcher vom hinteren Ende des Zylindergehäuses 106a seitwärts auskragt und sich dabei im wesentlichen parallel zum Joch 119 des Rahmens 127 erstreckt. Das andere Ende der Führungsholme 108 ragt bis in den Bereich des Joches 121, ist jedoch gegenüber diesem mit Bewegungsspiel angeordnet, welches mindestens in axialer Richtung wirksam ist.

Über die Gleichlaufvorrichtung 129 werden der Ausleger 128 und die Formaufspannplatte 113 gegensinnig zueinander und relativ zum Gehäuse 103 bewegt. Dabei werden die in den Führungsmuffen 103a axial verschiebbar gelagerten Führungsholme 108 relativ zum Gehäuse 103 in gleicher Weise wie der Rahmen 127 bewegt,

An dieser Stelle sei erwähnt, daß eine Fixierung der Führungsholme 108 am Gehäuse 103 zu einer größeren Baulänge des Systems führt, als wenn diese, wie hier ausgeführt, vorteilhaft zusammen mit dem Rahmen mitbewegt werden.

Vorteilhaft ist bei der Schließvorrichtung nach den Fig. 3 und 4, daß die Zugstangen 120 nicht mittig unterhalb der Formaufspannplatten 111 und 113 bzw. der Formhälften 114 und 115 zu liegen kommen, sondern, ebenso wie die Führungsholme 108, eine hierzu seitlich versetzte Lage einnehmen.

Beim Öffnen der Blasform 116 ist daher der Bereich unterhalb derselben sowohl von den Führungsholmen 108 als auch von den Zugstangen 120 frei.

Abschließend sei noch erwähnt, daß die raumfeste Halterung des Gehäuses 3 bzw. 103 relativ zum Maschinengestell der -nicht gezeigten - Blasformmaschine oder auch Spritzgießmaschine durch die an ihm angreifenden Parallelogrammschwingen 2 bzw. 102 oder auch durch andere geeignete Halteund/oder Führungselemente bewirkt wird, indem diese relativ zum Maschinengestell geführt werden.

## Patentansprüche

1. Schließvorrichtung für Formen zum Herstellen von Gegenständen aus thermoplastischem Kunststoff, insbesondere zum Blasformen von Hohlkörpern auf Blasformmaschinen, mit zwei auf Führungsholmen linear verschiebbar geführten Formaufspannplatten, die durch einen Kraftantrieb, z.B. einen Schließmotor, sowie eine Gleichlaufvorrichtung zueinander gegenläufig bewegbar sind, und mit einem aus mindestens einer Zugstange, einer Druckstange sowie zwei diese an ihren Enden miteinander verbindenden Jochen bestehenden Rahmen (27, 127), bei dem die Zug- und Druckstangen parallel und die Joche quer zur Verschieberichtung der Formaufspannplatten verlaufen, wobei das eine Joch mit einem Kragarm unmittelbar an der einen Formaufspannplatte angreift, während das andere Joch durch den zwischengeschalteten Kraftantrieb mit der zweiten Formaufspannplatte verbunden ist,
**dadurch gekennzeichnet,**
daß der Rahmen (27, 127) mit dem Kraftantrieb (6, 106) an einem raumfesten Gehäuse (3, 103) aufgehängt ist, das die gesonderten, vom Rahmen unabhängigen Führungsholme (8, 108) trägt,
und das die Joche (19, 119 und 21, 121) des Rahmens (27, 127) zumindest an den Formaufspannplatten (11, 111 und 13, 113) und/oder am zwischengeschalteten Kraftantrieb (6, 106) über Stützglieder (17, 117; 18, 118; 22, 122) angreifen, deren Achsebenen auf der Wirkungslinie der Schließkraft zwischen den beiden Formaufspannplatten (11, 111 und 13, 113) liegen.

2. Schließvorrichtung nach Anspruch 1,
**dadurch gekennzeichnet,**
daß die Stützglieder Gelenke (17, 117, 18, 118, 22, 122) sind.

3. Schließvorrichtung nach einem der Ansprüche 1 und 2,
**dadurch gekennzeichnet,**
daß die Joche (19, 119 und 21, 121) des Rahmens (27 und 127) auch mit der Druckstange (26, 126) durch Gelenke (24, 124 und 25, 125) in Verbindung stehen.

4. Schließvorrichtung nach einem der Ansprüche 1 bis 3,
**dadurch gekennzeichnet,**
daß der Kraftantrieb (6, 106) mit der zweiten Formaufspannplatte (13, 113) ebenfalls über ein Gelenk (17, 117) gekuppelt ist, dessen Achsebene auf der Wirkungslinie der Schließkraft liegt.

5. Schließvorrichtung nach einem der Ansprüche 1 bis 4,
**dadurch gekennzeichnet,**
daß das Gehäuse (3, 103) ein Lager (31, 131) für das Umkehrgetriebeglied (30, 130) der Gleichlaufvorrichtung (29, 129) trägt (Fig. 1 und 3).

6. Schließvorrichtung nach einem der Ansprüche 1 bis 5,
**dadurch gekennzeichnet,**
daß die Führungsholme (8, 108) paarweise für die Formaufspannplatten (11, 111;13, 113) vorgesehen sind (Fig. 2 und 4).

7. Schließvorrichtung nach einem der Ansprüche 1 bis 6,
**dadurch gekennzeichnet,**
daß die Zugstangen, vorzugsweise eine Zugstange (20), des Rahmens (27) räumlich getrennt von, vorzugsweise zwischen den beiden Führungsholmen (8) für die Formaufspannplatten (11 und 13), vorzugsweise auf gleicher Achsebene (9-9) mit diesen, angeordnet ist (Fig. 1 und 2).

8. Schließvorrichtung nach einem der Ansprüche 1 bis 6,
**dadurch gekennzeichnet,**
daß der Rahmen (127) zwei parallele Zugstangen (120) aufweist, deren jede mit Radialspiel von einem hohlen Führungsholm (108) umgeben ist. (Fig. 3 und 4)

9. Schließvorrichtung nach Anspruch 7 oder 8,
**dadurch gekennzeichnet,**
daß der Kraftantrieb (6, 106)oberhalb der Führungsholme (8, 108), aber mittig zwischen diesen und den Zugstangen (20, 120) liegend angeordnet ist.

10. Schließvorrichtung nach einem der Ansprüche 1 bis 9,
**dadurch gekennzeichnet,**
daß das dem Rahmen (27, 127) zugeordnete Element (6a, 106a) des Kraftantriebs (6, 106) einen Ausleger (28, 128) trägt, an dem das dem Rahmen (27, 127) zugewendete Teil (33, 133) der Gleichlaufvorrichtung (29, 129) angreift (Fig. 1 und 3).

11. Schließvorrichtung nach einem der Ansprüche 8 bis 10,
**dadurch gekennzeichnet,**
daß die Führungsholme (108) axial verschiebbar im Gehäuse (103) gelagert sind und an ihrem einen Ende mit dem Ausleger (128) gekuppelt sind (Fig. 3).

## Claims

1. Closing device for moulds for the production of articles of thermoplastic synthetic material, in particular for the blow-moulding of hollow bodies on blow-moulding machines, with two mould-clamping plates, which are guided to be linearly displaceable on guide spars and each movable relative to the other in opposite sense by a force drive, for example a closing motor, as well as a synchronising equipment, and with a frame (27, 127) consisting of at least a draw rod, a pressure rod as well as two yokes connecting these together at their ends, in which the draw rod and the pressure rod extend parallelly and the yokes extend transversely to the direction of displacement of the mould-clamping plates, wherein the one yoke engages by a bracket directly at the one mould-clamping plate, whilst the other yoke is connected through the interposed force drive with the second mould-clamping plate, characterised thereby, that the frame (27, 127) with the force drive (6, 106) is suspended at a housing (3, 103), which is fixed in space and carries the separate guide spars (8, 108), which are independent of the frame, and that the yokes (19, 119 and 21, 121) of the frame (27, 127) engage at least at the mould-clamping plates (11, 111 and 13, 113) and/or at the interposed force drive (6, 106) by way of support members (17, 117; 18, 118; 22, 122), the axial planes of which lie on the line of action of the closing force between both the mould-clamping plates (11, 111 and 13, 113).

2. Closing device according to claim 1, characterised thereby, that the support members are joints (17, 117; 18, 118; 22, 122).

3. Closing device according to one of the claims 1 and 2, characterised thereby, that the yokes (19, 119 and 21, 121) of the frame (27, 127) also stand in connection with the pressure rod (26, 126) through joints (24, 124 and 25, 125).

4. Closing device according to one of the claims 1 to 3, characterised thereby, that the force drive (6, 106) is likewise coupled with the second mould-clamping plate (13, 113) by way of a joint (17, 117), the axial plane of which lies on the line of action of the closing force.

5. Closing device according to one of the claims 1 to 4, characterised thereby, that the housing (3, 103) carries a bearing (31, 131) for the reversing gear member (30, 130) of the synchronising device (29, 129) (Figures 1 and 3).

6. Closing device according to one of the claims 1 to 5, characterised thereby, that the guide spars (8, 108) are provided in pairs for the mould-clamping plates (11, 111 and 13, 113) (Figures 2 and 4).

7. Closing device according to one of the claims 1 to 6, characterised thereby, that the draw rods, preferably one draw rod (20) of the frame (27) are/is arranged separately from and preferably between both the guide spars (8) for the mould-clamping plates (11 and 13), preferably on the same axial plane (9-9) with these (Figures 1 and 2).

8. Closing device according to one of the claims 1 to 6, characterised thereby, that the frame (127) comprises two parallel draw rods (120), each of which is surrounded with radial play by a hollow guide spar (108) (Figures 3 and 4).

9. Closing device according to claim 7 or 8, characterised thereby, that the force drive (6, 106) is arranged above the guide spars (8, 108), but lying centrally between these and the draw rods (20, 120).

10. Closing device according to one of the claims 1 to 9, characterised thereby, that element (6a, 106a) of the force drive (6, 106), which is associated with the frame (27, 127), carries a bracket (28, 128), at which that part (33, 133) of the synchronising device (29, 129), which faces the frame (27, 127), engages (Figures 1 and 3).

11. Closing device according to one of the claims 8 to 10, characterised thereby, that the guide spars (108) are borne to be axially displaceable in the housing (103) and coupled at their one end with the bracket (128) (Fig. 3).

## Revendications

1. Dispositif de fermeture de moules destinés à la fabrication d'objets en matière synthétique thermoplastique, en particulier pour le moulage par soufflage de corps creux dans des machines à souffler, comportant deux plateaux de fixation de moules pouvant être déplacés linéairement par un guidage sur des longerons de guidage, lesdits plateaux pouvant être déplacés dans un sens opposé l'un par rapport à l'autre à l'aide d'un entraînement mécanique, par exemple un moteur à cylindre, ainsi que d'un dispositif de synchronisation et comportant un cadre (27, 127) constitué par au moins une barre de traction, une barre de compression ainsi que par deux travées reliant lesdites barres l'une à l'autre en leurs extrémités, les barres de traction et de compression étant parallèles et les travées étant perpendiculaires au sens de déplacement des plateaux de fixation des moules, une travée s'agrippant directement à un des plateaux de fixation des moules au moyen d'un bras porte à faux alors que l'autre travée est reliée au deuxième plateau de fixation des moules via un entraînement mécanique placé entre la travée et ledit plateau, caractérisé en ce que le cadre (27, 127) est suspendu via l'entraînement mécanique (6, 106) à un bâti (3, 103) fixe qui supporte les longerons de guidage (8, 108) qui sont séparés et indépendants du cadre, et en ce que les travées (19, 119 et 21, 121) du cadre (27, 127) s'agrippent au moins aux plateaux de fixation des moules (11, 111 et 13, 113) et/ou à l'entraînement mécanique (6, 106) placé entre la travée et ledit plateau via des éléments de support (17, 117; 18, 118; 22, 122) dont les plans des axes sont situés sur la ligne d'action de la force de fermeture entre les deux plateaux de fixation des moules (11, 111 et 13, 113).

2. Dispositif de fermeture selon la revendication 1, caractérisé en ce que les éléments de support sont des articulations (17, 117, 18, 118, 22, 122).

3. Dispositif de fermeture selon une quelconque des revendications 1 et 2, caractérisé en ce que les travées (19, 119 et 21, 121) du cadre (27 et 127) sont également reliées à la barre de compression (26, 126) via des articulations (24, 124 et 25, 125).

4. Dispositif de fermeture selon une quelconque des revendications 1 à 3, caractérisé en ce que l'entraînement mécanique (6, 106) est également relié au deuxième plateau de fixation (13, 113) des moules au moyen d'une articulation (17, 117) dont le plan des axes est situé sur la ligne d'action de la force de fermeture.

5. Dispositif de fermeture selon une quelconque des revendications 1 à 4, caractérisé en ce que le bâti (3, 103) comporte un palier (31, 131) pour l'élément (30, 130) d'inversion du dispositif de synchronisation (29, 129), (cfr. fig. 1 et 3).

6. Dispositif de fermeture selon une quelconque des revendications 1 à 5, caractérisé en ce que les longerons de guidage (8, 108) pour les plateaux de fixation (11, 111; 13, 113) des moules sont prévus par paire (cfr. fig. 2 et 4).

7. Dispositif de fermeture selon une quelconque des revendications 1 à 6, caractérisé en ce que les barres de traction, de préférence une barre de traction (20) du cadre (27), sont disposées séparément des longerons et de préférence entre les deux longerons de guidage (8) des plateaux de fixation (11 et 13) des moules, de préférence dans le même plan des axes (9-9) que ceux-ci (fig. 1 et 2).

8. Dispositif de fermeture selon une quelconque des revendications 1 à 6, caractérisé en ce que le cadre (127) présente deux barres de traction (120) parallèles dont chacune est entourée, avec un jeu radial, par un longeron de guidage (108) creux (cfr. fig. 3 et 4).

9. Dispositif de fermeture selon une quelconque des revendications 7 ou 8, caractérisé en ce que l'entraînement mécanique (6, 106) est situé au-dessus des longerons de guidage (8, 108) creux, mais couchés au milieu entre ceux-ci et les barres de traction (20, 120).

10. Dispositif de fermeture selon une quelconque des revendications 1 à 9, caractérisé en ce que l'élément (6a, 106a) de l'entraînement mécanique (6, 106) placé sur le cadre (27, 127) comporte un bras (28, 128) auquel s'agrippe la partie (33, 133) du dispositif de synchronisation (29, 129) faisant face au cadre (27, 127) (cfr. fig. 1 et 3).

11. Dispositif de fermeture selon une quelconque des revendications 8 à 10, caractérisé en ce que les longerons de guidage (108) sont fixés dans le bâti (103) de manière à pouvoir être déplacés axialement et en ce qu'ils sont accouplés en une de leurs extrémités au bras (128) (cfr. fig. 3).
